# EUROPEAN PATENT APPLICATION

(11) **EP 4 841 769 A1**
(43) Date of publication of application: **18.11.2026**
(21) Application number: 24934417.7
(22) Date of filing: 08.04.2024
(51) Int. Cl.: H01M 50/244, H01M 50/204, H01M 50/289, H01M 10/613, H01M 10/6568

(54) **ENERGY STORAGE CONTAINER**

(71) Applicant: Contemporary Amperex Technology Co., Limited, Ningde, Fujian 352100 (CN)
(72) Inventor: ZHANG, Mingliang, Ningde, Fujian 352100 (CN); PENG, Haoran, Ningde, Fujian 352100 (CN); SU, Haibin, Ningde, Fujian 352100 (CN)
(74) Representative: Aera A/S
(86) International application number: PCT/CN2024/086624
(87) International publication number: WO 2025/213331

(57) **Abstract**

Provided is an energy storage container. The energy storage container comprises a container body (1); in three directions, i.e., a first direction, a second direction, and an up-down direction, the sizes of the container body (1) in two directions among the three directions are the same as the size of a standard container having a preset size, and the size of the container body (1) in the remaining direction is smaller than the size of the standard container having the preset size, wherein the preset size is 10 chi, 20 chi, 30 chi, 40 chi or 45 chi, and the first direction, the second direction, and the up-down direction are perpendicular to each other. Under the condition that the size of the container body (1) is not greatly changed, the weight of the container body (1) can be reduced, and the energy storage container can be matched with conventional transportation apparatuses, thereby satisfying the transportation requirements of land transportation and/or ocean shipping, etc.

## Description

### TECHNICAL FIELD

The present application relates to the field of battery technologies, and in particular, to an energy storage container.

### BACKGROUND

Batteries are increasingly used in daily life and production. For example, new energy vehicles equipped with batteries have been widely used, and batteries can be used to provide power to new energy vehicles in whole or in part. In addition, batteries are increasingly used in energy storage and other fields.

Batteries are arranged in an energy storage container. An energy storage container is an electric energy storage and transfer device, and is an important component in the development of distributed energy, smart grids, and energy internet in the energy storage field. Energy storage containers usually need to be transported from a production site to a use site by land transportation and/or sea transportation. How to reduce transportation difficulty and meet transportation requirements is an urgent problem to be solved.

### SUMMARY

In view of this, embodiments of the present application expect to provide an energy storage container that can reduce transportation difficulty.

In order to achieve the above purpose, the technical solutions of the embodiments of the present application are implemented as follows:

An embodiment of the present application provides an energy storage container, including a container body, where in three directions of a first direction, a second direction, and an up-down direction, a dimension of the container body in two of the directions is the same as a dimension of a standard container having a preset dimension, a dimension of the container body in the other direction is smaller than the dimension of the standard container having the preset dimension, and the preset dimension is 10 feet, 20 feet, 30 feet, 40 feet, or 45 feet; where the first direction, the second direction, and the up-down direction are perpendicular to each other.

In the embodiment of the present application, the dimension of the container body in two of the directions is the same as the dimension of the standard container having the preset dimension, and the dimension of the container body in the other direction is smaller than the dimension of the standard container having the preset dimension. That is, the dimension of the container body in only one direction is smaller than the preset dimension of the standard container. The preset dimension of the standard container meets the requirements of industry standards and can be used across regions. Thus, without greatly changing the dimension of the container body, the container body can reduce weight and can match conventional transportation and transfer equipment, thereby meeting transportation requirements such as land transportation and/or sea transportation.

In some embodiments, the energy storage container includes a battery disposed in the container body, and a single battery has a weight of 5 kg to 60 kg.

In this embodiment, the weight of a single battery is appropriate, so that an appropriate quantity of batteries can be placed in the container body, and the energy density is moderate while meeting transportation requirements.

In some embodiments, the quantity of the batteries is 416 to 2080.

In this embodiment, the weight of a single battery and the quantity of batteries are reasonably matched, so that the total weight of all batteries meets transportation requirements and the energy density per unit area of the container body is increased.

In some embodiments, the energy storage container includes a battery disposed in the container body, and the total weight of all the batteries is 10 tons to 25 tons.

In this embodiment, the total weight of all batteries meets transportation requirements, and the energy storage container has a relatively large energy density.

In some embodiments, at least one of a main control box, a power distribution box, a liquid cooling unit, a general control box, and a busbar is not arranged in the container body.

In this embodiment, the present application breaks the convention in that at least one of a main control box, a power distribution box, a liquid cooling unit, a general control box, and a busbar is not provided in the container body. With such design, on the one hand, the space originally occupied by at least one of the main control box, the power distribution box, the liquid cooling unit, the general control box, and the busbar in the container body can be used for placing batteries, thereby increasing the quantity of batteries in the container body, maximizing the utilization of the internal space of the container body, and thus increasing the energy density of the entire energy storage container. On the other hand, the types of devices inside the container body are reduced, which can reduce the frequency of operation and maintenance of the energy storage container during normal use.

In some embodiments, the container body is filled with a battery, a fire protection system, a liquid cooling pipeline, and a cable system.

In this embodiment, the internal space of the container body can be maximized to a certain extent, increasing the energy density of the energy storage container.

In some embodiments, the liquid cooling pipeline includes a main liquid inlet pipeline, a main liquid return pipeline, a liquid inlet branch, and a liquid return branch, where each of the batteries corresponds to one of the liquid inlet branches and one of the liquid return branches, each of the liquid inlet branches is in communication with the main liquid inlet pipeline, and each of the liquid return branches is in communication with the main liquid return pipeline.

In this embodiment, the liquid inlet branch and the liquid return branch enable each battery to contact the cooling liquid to facilitate sufficient heat exchange. The cooling liquid is concentrated into the container body through the main liquid inlet pipeline and then is distributed through the liquid inlet branch, which can simplify the cooling liquid inlet path, save pipelines, save space, and reduce the total weight of the liquid cooling pipeline. The cooling liquid is concentrated and discharged from the container body through the main liquid return pipeline, which can simplify the cooling liquid discharge path and save pipelines.

In some embodiments, at least two of the batteries are arranged along a plane perpendicular to the up-down direction to form a layer of battery pack, at least two of the battery packs are stacked along the up-down direction, and the main liquid inlet pipeline and the main liquid return pipeline are arranged above the uppermost battery pack.

In this embodiment, the top space of the container body is relatively open, which is convenient for pipe arrangement and can prevent the main liquid inlet pipeline and the main liquid return pipeline from interfering with the stacking of at least two battery packs.

In some embodiments, the container body includes a frame and a shielding plate, the frame includes a load-bearing frame and a diagonal brace beam, the shielding plate covers an outer surface of the load-bearing frame, the diagonal brace beam is arranged at the bottom of the load-bearing frame, and the diagonal brace beam extends along a third direction in a plane perpendicular to the up-down direction, where both the first direction and the second direction are obliquely intersected with the third direction.

In this embodiment, the container body adopts a frame and a shielding plate, and the shielding plate covers the outer surface of the load-bearing frame to prevent external objects from contacting the batteries in the accommodating space. The load-bearing frame is a hollow frame body with light self-weight, which can reduce space occupation. The diagonal brace beam extends along the first direction in a plane perpendicular to the up-down direction, the accommodating space is relatively large to arrange as many batteries as possible, the diagonal brace beam can bear the load and strengthen the stability of the bottom of the load-bearing frame, effectively improving the structural strength of the load-bearing frame, thereby improving the structural strength of the container body and reducing the probability of deformation of the bottom of the container body due to stress. Taking the dimension of the container body in the first direction being smaller than the dimension of the standard container having the preset dimension as an example, a projected area of the container body on a horizontal plane is smaller than a projected area of the standard container on the horizontal plane. Under the same weight condition, the intensity of pressure of the container body is greater than that of the standard container. The diagonal brace beam can effectively improve the bottom structural strength of the load-bearing frame, so that the bottom surface of the frame can bear a relatively large load, and the container body can be stably placed on a bearing surface such as the ground.

In some embodiments, the frame includes a longitudinal reinforcing beam extending along the first direction, two of the longitudinal reinforcing beams are both arranged at the bottom of the load-bearing frame, the two of the longitudinal reinforcing beams are spaced apart along the up-down direction, and one end of at least part of the diagonal brace beam is clamped between the two longitudinal reinforcing beams.

In this embodiment, on the one hand, the two longitudinal reinforcing beams can further improve the structural strength of the bottom of the frame; on the other hand, one end of the diagonal brace beam is fixed by the two longitudinal reinforcing beams, which can improve the connection stability of the diagonal brace beam.

In some embodiments, the container body is formed with a maintenance opening and a cable outlet opening, and the maintenance opening and the cable outlet opening are respectively formed on two side surfaces of the container body that are different from each other along a circumferential direction.

In this embodiment, the maintenance opening and the cable outlet opening are respectively formed in the circumferential direction of the container body, and stacking at least two container bodies along the up-down direction does not block the maintenance opening and the cable outlet opening; and the maintenance opening and the cable outlet opening are located on two different side surfaces and do not interfere with each other, which not only facilitates personnel to enter and exit the maintenance opening, but also facilitates external circuit connection.

In some embodiments, the maintenance opening is formed on a side surface of the container body along one of the first direction and the second direction, and the cable outlet opening is formed on a side surface of the container body along the other of the first direction and the second direction.

In this embodiment, end surfaces of two container bodies away from the cable outlet opening can abut against each other, reducing a gap between the container bodies, facilitating assembly of the container bodies along the first direction or the second direction at the use site, and improving the site utilization rate of the use site such as a power station.

### BRIEF DESCRIPTION OF DRAWINGS

FIG. 1 is a schematic structural diagram of a first energy storage container according to an embodiment of the present application;
FIG. 2 is a schematic diagram of a partial structure of the container body in FIG. 1;
FIG. 3 is a schematic diagram of a frame of the first energy storage container shown in FIG. 1;
FIG. 4 is an enlarged schematic diagram of position A in FIG. 3;
FIG. 5 is a schematic diagram of a partial structure of the first energy storage container shown in FIG. 1;
FIG. 6 is a schematic diagram of the first energy storage container shown in FIG. 1 stacked along an up-down direction;
FIG. 7 is a schematic diagram of assembly of the first energy storage container in a plane perpendicular to an up-down direction;
FIG. 8 is a schematic structural diagram of a second energy storage container according to an embodiment of the present application;
FIG. 9 is a schematic structural diagram of the second energy storage container in FIG. 8 from another perspective; and
FIG. 10 is a schematic diagram of assembly of the second energy storage container in a plane perpendicular to an up-down direction.

### DESCRIPTION OF EMBODIMENTS

The following describes in detail embodiments of technical solutions of the present application with reference to the accompanying drawings. The following embodiments are merely intended for a clearer description of the technical solutions of the present application and therefore are merely used as examples which do not constitute any limitation on the protection scope of the present application.

Unless otherwise defined, all technical and scientific terms used herein shall have the same meanings as commonly understood by persons skilled in the art to which the present application relates. The terms used herein are intended to merely describe the specific embodiments rather than to limit the present application.

In the description of the embodiments of the present application, the terms "first", "second", and the like are merely intended to distinguish between different objects, and shall not be understood as any indication or implication of relative importance or any implicit indication of the number, sequence or primary-secondary relationship of the technical features indicated.

In this specification, reference to "embodiment" means that specific features, structures, or characteristics described with reference to the embodiment may be included in at least one embodiment of the present application. The term "embodiment" appearing in various positions in the specification does not necessarily refer to the same embodiment or an independent or alternative embodiment that is exclusive of other embodiments. It is explicitly or implicitly understood by persons skilled in the art the embodiments described herein may be combined with other embodiments.

It should be noted that, in the embodiments of the present application, a first direction is represented by X, a second direction is represented by Y, and an up-down direction is represented by Z, where Z1 represents upward, the downward direction is opposite to the upward direction, and Z2 represents downward.

In the related technologies, energy storage containers generally need to be transported from the production site to the use site by land transportation and/or sea transportation. Generally, land transportation and sea transportation have weight limits for transportation. For example, the load capacity for general road transportation does not exceed 40 tons, and the maximum weight limit for first grade highways and bridges does not exceed 50 tons, which also includes the standard axle load of transportation vehicles from 10 tons to 13 tons. As a result, the weight of energy storage containers is further restricted. The hoisting equipment in the stacking yard of the energy storage container loading terminal, such as front-handling cranes and rail-mounted cranes, are mostly limited to a weight of 35 tons to 45 tons. Generally, energy storage containers belong to Class 9 miscellaneous dangerous goods. The design of stacking yards of Class 9 miscellaneous dangerous goods at terminals is generally less than or equal to 40 tons (Class 9 dangerous goods need to be isolated from ordinary items, that is, stored separately, and there are strict requirements for the storage area in terms of environment, safety equipment, and the like). In summary, if the power of the energy storage container in the related technologies is to be increased, the weight of the energy storage container also increases accordingly. Excessive weight leads to a sharp increase in transportation difficulty and cost, which raises the requirements for a series of conventional transportation and transfer equipment involved in the above-mentioned transportation process, such as transportation vehicles, transportation roads, terminal stacking yards, hoisting equipment, or the like. It is by no means easy to improve the transportation capacity of conventional transportation and transfer equipment throughout the entire transportation process, and the investment cost is significant.

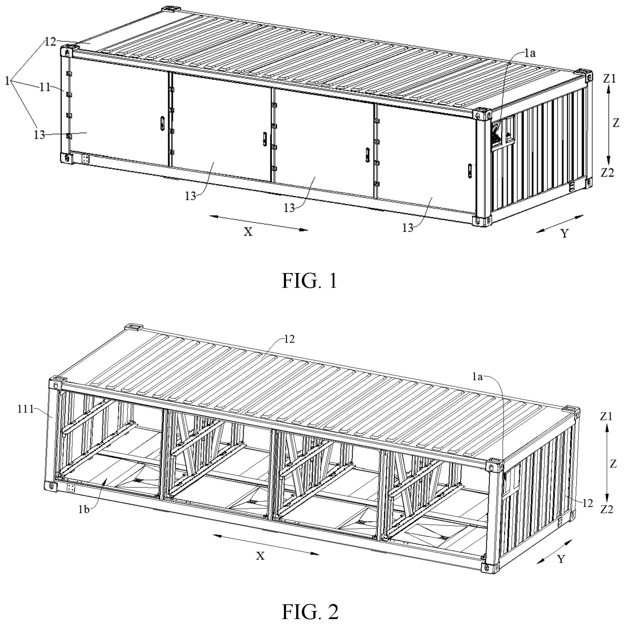

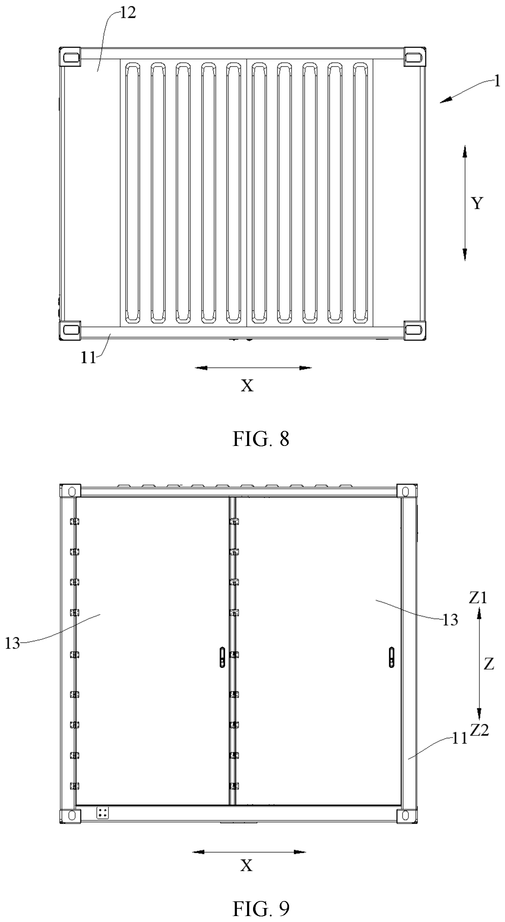

Referring to FIG. 1 and FIG. 8, an embodiment of the present application provides an energy storage container. The energy storage container includes a container body 1. In three directions of a first direction X, a second direction Y, and an up-down direction Z, a dimension of the container body 1 in two of the directions is the same as a dimension of a standard container having a preset dimension, a dimension of the container body 1 in the other direction is smaller than the dimension of the standard container having the preset dimension, and the preset dimension is 10 feet, 20 feet, 30 feet, 40 feet, or 45 feet; where the first direction X, the second direction Y, and the up-down direction Z are perpendicular to each other.

A standard container refers to a general container body having a preset dimension. The general container body meets the standard requirements for transportation in at least two different regions or countries, and transportation includes but is not limited to land transportation and/or sea transportation.

In the embodiment of the present application, the dimension of the container body 1 in two of the directions is the same as the dimension of the standard container having the preset dimension, and the dimension of the container body 1 in the other direction is smaller than the dimension of the standard container having the preset dimension. That is, the dimension of the container body 1 in only one direction is smaller than the preset dimension of the standard container. The preset dimension of the standard container meets the requirements of industry standards and can be used across regions. Thus, without greatly changing the dimension of the container body 1, the container body 1 can reduce weight and can match conventional transportation and transfer equipment, thereby meeting transportation requirements such as land transportation and/or sea transportation.

It should be understood that the dimension of the container body 1 in each direction is the dimension of an outer contour shape of the container body 1.

The preset dimension may be 10 feet, 20 feet, 30 feet, 40 feet, or 45 feet. The above dimensions can be defined according to the requirements of industry standards. For example, the preset dimension can be the standard requirements defined by laws, regulations, departmental rules, and the like of various countries related to land transportation and/or sea transportation. For example, the following describes each preset dimension:

10 feet may include: a dimension of 2991 mm in the first direction X, with a tolerance of 0 mm to 5 mm; a dimension of 2438 mm in the second direction Y, with a tolerance of 0 mm to 5 mm; and a dimension less than or equal to 2438 mm in the up-down direction Z, with a tolerance of 0 mm to 5 mm.

20 feet may include: a dimension of 6058 mm in the first direction X, with a tolerance of 0 mm to 6 mm; a dimension of 2438 mm in the second direction Y, with a tolerance of 0 mm to 5 mm; and a dimension of 2896 mm, 2591 mm, or less than or equal to 2438 mm in the up-down direction Z, with a tolerance of 0 mm to 5 mm.

30 feet may include: a dimension of 9125 mm in the first direction X, with a tolerance of 0 mm to 10 mm; a dimension of 2438 mm in the second direction Y, with a tolerance of 0 mm to 5 mm; and a dimension of 2896 mm, 2591 mm, or less than or equal to 2438 mm in the up-down direction Z, with a tolerance of 0 mm to 5 mm.

40 feet may include: a dimension of 12192 mm in the first direction X, with a tolerance of 0 mm to 10 mm; a dimension of 2438 mm in the second direction Y, with a tolerance of 0 mm to 5 mm; and a dimension of 2896 mm, 2591 mm, or less than or equal to 2438 mm in the up-down direction Z, with a tolerance of 0 mm to 5 mm.

45 feet may include: a dimension of 13716 mm in the first direction X, with a tolerance of 0 mm to 10 mm; a dimension of 2438 mm in the second direction Y, with a tolerance of 0 mm to 5 mm; and a dimension of 2591 mm or 2896 mm in the up-down direction Z, with a tolerance of 0 mm to 5 mm.

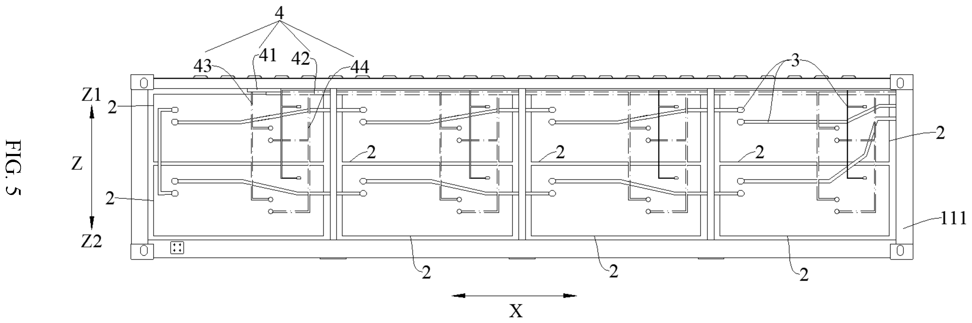

In some embodiments, referring to FIG. 1 and FIG. 5, the energy storage container includes a battery 2 disposed in the container body 1, and a single battery 2 has a weight of 5 kg to 60 kg. For example, the weight of a single battery 2 is 5 kg, 10 kg, 15 kg, 20 kg, 25 kg, 30 kg, 35 kg, 40 kg, 45 kg, 50 kg, 55 kg, 60 kg, or the like. The weight of a single battery 2 is appropriate, so that an appropriate quantity of batteries 2 can be placed in the container body 1, and the energy density is moderate while meeting transportation requirements.

It should be noted that the unit "kg" is kilogram.

In some embodiments, the quantity of batteries 2 is 416 to 2080. For example, the quantity of batteries 2 is 416, 500, 600, 700, 800, 950, 1000, 2000, 2080, or the like. The quantity of batteries 2 refers to the quantity of batteries 2 in a single container body 1. The weight of a single battery 2 and the quantity of batteries 2 are reasonably matched, so that the total weight of all batteries 2 meets transportation requirements and the energy density per unit area of the container body 1 is increased.

In some embodiments, the total weight of all batteries 2 is 10 tons to 25 tons. For example, the total weight of all batteries 2 is 10 tons, 15 tons, 18 tons, 20 tons, 25 tons, or the like. The total weight of all batteries 2 is the sum of the weights of all batteries 2 in a single container body 1. In this way, the total weight of all batteries 2 meets transportation requirements, and the energy storage container has a relatively large energy density.

In the embodiment of the present application, the battery 2 may be a secondary battery, and the secondary battery refers to a battery that can be recharged after discharge to activate an active material and continue to be used.

The battery 2 may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, and/or a lead-acid battery.

The battery 2 may be a cylindrical battery, a prismatic battery, or a battery of another shape. The prismatic battery includes a square battery or a polygonal battery, such as a hexagonal prism battery. The present application is not particularly limited.

The battery 2 includes a housing, an electrode assembly, and an electrolyte. The housing is used to encapsulate the electrode assembly, the electrolyte, and other components. For example, the electrode assembly includes a positive electrode, a negative electrode, and a separator. During the charging and discharging process of the battery 2, active ions (for example, lithium ions) in the electrolyte are intercalated and deintercalated back and forth between the positive electrode and the negative electrode to achieve charging and discharging.

In some embodiments, at least one of a main control box, a power distribution box, a liquid cooling unit, a general control box, and a busbar is not arranged in the container body 1. In this embodiment, the present application breaks the convention in that at least one of a main control box, a power distribution box, a liquid cooling unit, a general control box, and a busbar is not provided in the container body 1. With such design, on the one hand, the space originally occupied by at least one of the main control box, the power distribution box, the liquid cooling unit, the general control box, and the busbar in the container body 1 can be used for placing the batteries 2, thereby increasing the quantity of batteries 2 in the container body 1, maximizing the utilization of the internal space of the container body 1, and thus increasing the energy density of the entire energy storage container. On the other hand, the types of devices inside the container body 1 are reduced, which can reduce the frequency of operation and maintenance of the energy storage container during normal use.

The main control box can be used to provide a control function for the battery 2. The power distribution box can be used to provide power supply and circuit protection functions for electric devices. The liquid cooling unit can be used to drive the flow of cooling liquid. The general control box can be used to provide monitoring and management functions for the battery 2. The busbar can be used to connect multiple cable branches of the energy storage container. It can be understood that the main control box, the power distribution box, the liquid cooling unit, the general control box, and the busbar can all adopt structures in the prior art.

The cooling liquid is a liquid used for heat exchange with the battery 2. For example, the cooling liquid includes but is not limited to water liquid.

In some embodiments, referring to FIG. 1 and FIG. 5, the container body 1 is filled with a battery 2, a fire protection system, a liquid cooling pipeline 4, and a cable system 3. That is, only the battery 2, the fire protection system, the liquid cooling pipeline 4, and the cable system 3 can be provided in the container body 1. In this way, the internal space of the container body 1 can be maximized to a certain extent, increasing the energy density of the energy storage container.

The fire protection system is used to provide a fire extinguishing function. The liquid cooling pipeline 4 is used to circulate the cooling liquid to exchange heat with the battery 2. The liquid cooling pipeline 4 can be formed by connecting pipes. For example, the liquid cooling pipeline 4 can be in communication with an external pipeline through a liquid cooling pipeline 4 adapter plate. The cable system 3 is used to be electrically connected to the battery 2 to achieve electric energy and signal transmission. The cable system 3 can be formed by connecting cables. For example, the cable system 3 can be used to be electrically connected to at least one of a main control box, a power distribution box, a general control box, and a busbar outside the container body 1. The cable system 3 may include a power distribution line and a communication signal transmission line. For example, the cable system 3 can be connected to an external circuit through a high-voltage and low-voltage output adapter plate.

In some embodiments, referring to FIG. 1 to FIG. 5, an accommodating space 1b is formed in the container body 1. The accommodating space 1b is used to place devices such as the battery 2, the fire protection system, the liquid cooling pipeline 4, and/or the cable system 3.

In some embodiments, referring to FIG. 5, the liquid cooling pipeline 4 is shown with a dotted-dashed line in FIG. 5. The liquid cooling pipeline 4 includes a main liquid inlet pipeline 41, a main liquid return pipeline 42, a liquid inlet branch 43, and a liquid return branch 44. Each battery 2 corresponds to one liquid inlet branch 43 and one liquid return branch 44, each liquid inlet branch 43 is in communication with the main liquid inlet pipeline 41, and each liquid return branch 44 is in communication with the main liquid return pipeline 42. For example, if the quantity of batteries 2 is at least two, the quantity of liquid inlet branches 43 and the quantity of liquid return branches 44 are both at least two. That is, the battery 2, the liquid inlet branch 43, and the liquid return branch 44 may be in one-to-one correspondence.

The cooling liquid can enter the container body 1 through the main liquid inlet pipeline 41, then flow through the battery 2 where it is located through the liquid inlet branch 43 to exchange heat with the battery 2. The cooling liquid after heat exchange converges into the main liquid return pipeline 42 through the liquid return branch 44, and the cooling liquid of all liquid return branches 44 can flow out of the container body 1 through the main liquid return pipeline 42.

In this embodiment, the liquid inlet branch 43 and the liquid return branch 44 enable each battery 2 to contact the cooling liquid to facilitate sufficient heat exchange. The cooling liquid is concentrated into the container body 1 through the main liquid inlet pipeline 41 and then is distributed through the liquid inlet branch 43, which can simplify the cooling liquid inlet path, save pipelines, save space, and reduce the total weight of the liquid cooling pipeline 4. The cooling liquid is concentrated and discharged from the container body 1 through the main liquid return pipeline 42, which can simplify the cooling liquid discharge path and save pipelines.

It can be understood that the battery 2, the fire protection system, and the cable system 33 can adopt structures in the prior art.

In some embodiments, referring to FIG. 5, at least two batteries 2 are arranged along a plane perpendicular to the up-down direction Z to form a layer of battery pack, at least two battery packs are stacked along the up-down direction Z, and the main liquid inlet pipeline 41 and the main liquid return pipeline 42 are arranged at a position Z1 above the uppermost battery pack. For example, one end of the liquid inlet branch 43 is in communication with the main liquid inlet pipeline 41, and the other end of the liquid inlet branch 43 extends toward the battery 2 below. The top space of the container body 1 is relatively open, which is convenient for pipe arrangement and can prevent the main liquid inlet pipeline 41 and the main liquid return pipeline 42 from interfering with the stacking of at least two battery packs.

In some embodiments, referring to FIG. 5, at least two batteries 2 are arranged side by side along the second direction Y to form a battery unit, and at least two battery units are arranged along the first direction X to form a layer of battery pack. The arrangement of at least two batteries 2 side by side along the second direction Y means that at least two batteries 2 are arranged in parallel along a thickness direction thereof. Taking a square battery 2 as an example, large surfaces of at least two square batteries 2 are arranged in parallel. For example, the battery 2 is placed along the up-down direction Z, the large surface of the battery 2 is parallel to the up-down direction Z, and at least two batteries 2 of the battery unit are arranged in parallel.

In some embodiments, referring to FIG. 1 to FIG. 7, the dimensions of the container body 1 in the first direction X and the second direction Y are the same as the dimension of the standard container having the preset dimension, and the dimension of the container body 1 in the up-down direction Z is smaller than the dimension of the standard container having the preset dimension. For example, the dimension of the container body 1 in the up-down direction Z may be one-third, one-half, or the like of the dimension of the standard container having the preset dimension. That is, the height of the container body 1 is one-half or one-third of the height dimension of the standard container. With such design, on the one hand, each container body 1 can be transported separately, which, at the use site, can be stacked in the up-down direction Z and/or assembled along a plane perpendicular to the up-down direction Z according to requirements, thereby achieving the purpose of reducing transportation difficulty and cost. On the other hand, the dimensions of the container body 1 in the first direction X and the second direction Y are the same as the dimension of the standard container having the preset dimension, a floor area of a single container body 1 is unchanged compared with the standard container, and the foundation after at least two container bodies 1 are stacked along the up-down direction Z is relatively stable. Stacking at least two container bodies 1 along the up-down direction Z can reduce the total floor area, which facilitates the space utilization of the use site such as a power station site.

In some embodiments, the dimensions of the container body 1 in the first direction X and the up-down direction Z are the same as the dimension of the standard container having the preset dimension, and the dimension of the container body 1 in the second direction Y is smaller than the dimension of the standard container having the preset dimension. For example, the dimension of the container body 1 in the second direction Y may be one-third, one-half, or the like of the dimension of the standard container having the preset dimension. Taking the second direction Y as a width direction of the standard container as an example, the width of the container body 1 is one-half or one-third of the width dimension of the standard container. On the one hand, each container body 1 can be transported separately, which, at the use site, can be stacked in the up-down direction Z and/or assembled along a plane perpendicular to the up-down direction Z according to requirements, thereby achieving the purpose of reducing transportation difficulty and cost. On the other hand, the floor area of a single container body 1 is reduced, which facilitates the space utilization of the use site such as a power station site.

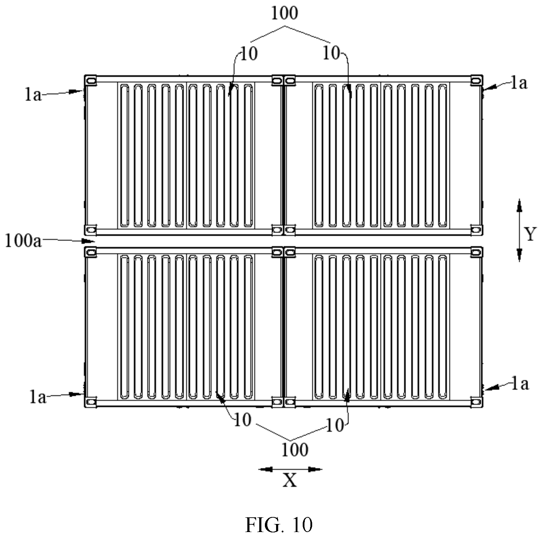

In some embodiments, referring to FIG. 8 to FIG. 10, the dimensions of the container body 1 in the second direction Y and the up-down direction Z are the same as the dimension of the standard container having the preset dimension, and the dimension of the container body 1 in the first direction X is smaller than the dimension of the standard container having the preset dimension. For example, the dimension of the container body 1 in the first direction X may be one-third, one-half, or the like of the dimension of the standard container having the preset dimension. Taking the first direction X as the length direction of the standard container as an example, the length of the container body 1 is one-half or one-third of the length dimension of the standard container. On the one hand, each container body 1 can be transported separately, which, at the use site, can be stacked in the up-down direction Z or assembled along a plane perpendicular to the up-down direction Z according to requirements, thereby achieving the purpose of reducing transportation difficulty and cost. On the other hand, the floor area of a single container body 1 is reduced, which facilitates the space utilization of the use site such as a power station site.

In some embodiments, referring to FIG. 1 to FIG. 4, the container body 1 includes a frame 11 and a shielding plate 12, the frame 11 includes a load-bearing frame 111 and a diagonal brace beam 112, the shielding plate 12 covers the outer surface of the load-bearing frame 111, the diagonal brace beam 112 is arranged at the bottom of the load-bearing frame 111, and the diagonal brace beam 112 extends along a third direction in a plane perpendicular to the up-down direction Z, where both the first direction X and the second direction Y are obliquely intersected with the third direction.

In this embodiment, the container body 1 adopts a frame 11 and a shielding plate 12. The shielding plate 12 covers an outer surface of the load-bearing frame 111 to prevent external objects from contacting the batteries 2 in the accommodating space 1b. The load-bearing frame 111 is a hollow frame body with light self-weight, which can reduce space occupation. The diagonal brace beam 112 extends along the first direction X in a plane perpendicular to the up-down direction Z. The accommodating space 1b is relatively large to arrange as many batteries 2 as possible. The diagonal brace beam 112 can bear the load and strengthen the stability of the bottom of the load-bearing frame 111, effectively improving the structural strength of the load-bearing frame 111, thereby improving the structural strength of the container body 1 and reducing the probability of deformation of the bottom of the container body 1 due to stress. Taking the dimension of the container body 1 in the first direction X being smaller than the dimension of the standard container having the preset dimension as an example, a projected area of the container body 1 on a horizontal plane is smaller than a projected area of the standard container on the horizontal plane. Under the same weight condition, the intensity of pressure of the container body 1 is greater than that of the standard container. The diagonal brace beam 112 can effectively improve the bottom structural strength of the load-bearing frame 111, so that the bottom surface of the frame 11 can bear a relatively large load, and the container body 1 can be stably placed on a bearing surface such as the ground.

In some embodiments, the shielding plate 12 includes a corrugated plate, such as a low-wave corrugated plate.

In some embodiments, referring to FIG. 2 and FIG. 5, the load-bearing frame 111 is formed with an accommodating space 1b. The accommodating space 1b is used to accommodate the battery 2 and other devices, such as a fire protection system, a liquid cooling pipeline 4, a cable system 3, or the like.

The material of the load-bearing frame 111 is not limited. For example, the material of the load-bearing frame 111 includes but is not limited to metal materials, such as steel.

The material of the diagonal brace beam 112 is not limited. For example, the material of the diagonal brace beam 112 includes but is not limited to metal materials, such as steel.

The shape of the diagonal brace beam 112 is not limited. For example, the diagonal brace beam 112 may be a square tube with a quadrilateral cross-sectional shape.

The connection method between the diagonal brace beam 112 and the load-bearing frame 111 is not limited. For example, the diagonal brace beam 112 and the load-bearing frame 111 may be non-detachably connected or detachably connected. Non-detachable connections include but are not limited to welding, or the like.

The outer contour shape of the container body 1 is a hexahedron shape. In some embodiments, the load-bearing frame 111 may include four longitudinal rods extending along the first direction X, four vertical rods extending along the up-down direction Z, and four cross rods extending along the second direction Y. The above rods together form the edges of the hexahedron shape. In this way, the load-bearing frame 111 forms a hollow hexahedron shape, and the six faces of the hexahedron shape are all covered with the shielding plate 12. The longitudinal rods, vertical rods, and cross rods can all adopt square tubes with quadrilateral cross-sectional shapes.

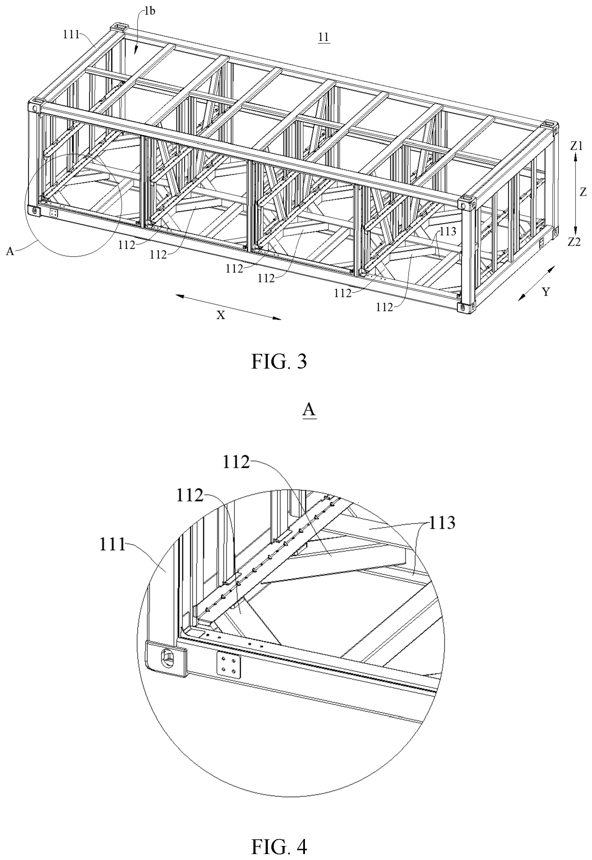

In some embodiments, referring to FIG. 3 to FIG. 4, the frame 11 includes a longitudinal reinforcing beam 113 extending along the first direction X. Two longitudinal reinforcing beams 113 are both arranged at the bottom of the load-bearing frame 111, the two longitudinal reinforcing beams 113 are spaced apart along the up-down direction Z, and one end of at least part of the diagonal brace beam 112 is clamped between the two longitudinal reinforcing beams 113. For example, two ends of the longitudinal reinforcing beam 113 along the first direction X are connected to the load-bearing frame 111. For example, one end of part of the diagonal brace beam 112 is clamped between the two longitudinal reinforcing beams 113, and one end of the remaining part of the diagonal brace beam 112 is not clamped between the two longitudinal reinforcing beams 113. For another example, one end of all the diagonal brace beam 112 is clamped between the two longitudinal reinforcing beams 113.

In this embodiment, on the one hand, the two longitudinal reinforcing beams 113 can further improve the structural strength of the bottom of the frame 11; on the other hand, one end of the diagonal brace beam 112 is fixed by the two longitudinal reinforcing beams 113, which can improve the connection stability of the diagonal brace beam 112.

The material of the longitudinal reinforcing beam 113 is not limited. For example, the material of the longitudinal reinforcing beam 113 includes but is not limited to metal materials, such as steel.

The connection method between the longitudinal reinforcing beam 113 and the load-bearing frame 111 is not limited. For example, the longitudinal reinforcing beam 113 and the load-bearing frame 111 may be non-detachably connected or detachably connected. Non-detachable connections include but are not limited to welding, or the like.

In some embodiments, referring to FIG. 1, FIG. 2, and FIG. 7, the container body 1 is formed with a maintenance opening and a cable outlet opening 1a. The maintenance opening and the cable outlet opening 1a are respectively formed on two side surfaces of the container body 1 that are different from each other along a circumferential direction. The maintenance opening is a window for operators to enter and exit the container body 1 to maintain devices inside the container body 1. The cable outlet opening 1a is a window for cables inside the container body 1 to connect to an external circuit. The maintenance opening and the cable outlet opening 1a are respectively formed in the circumferential direction of the container body 1, and stacking at least two container bodies 1 along the up-down direction Z does not block the maintenance opening and the cable outlet opening 1a; and the maintenance opening and the cable outlet opening 1a are located on two different side surfaces and do not interfere with each other, which not only facilitates personnel to enter and exit the maintenance opening, but also facilitates external circuit connection.

It should be noted that the circumferential direction is a direction surrounding a straight line extending along the up-down direction Z. Two side surfaces that are different from each other along the circumferential direction refer to two side surfaces facing different directions in the circumferential direction. For example, taking the first direction X as the front-back direction and the second direction Y as the left-right direction as an example, for example, two side surfaces that are different from each other along the circumferential direction may be the front side surface and the rear side surface of the container body 1; for another example, two side surfaces that are different from each other along the circumferential direction may be the left side surface and the right side surface of the container body 1; for another example, two side surfaces that are different from each other along the circumferential direction may be one being the front side surface or the rear side surface, and the other being the left side surface or the right side surface.

In some embodiments, an accommodating space 1b is formed in the container body 1, and both the maintenance opening and the cable outlet opening 1a are in communication with the accommodating space 1b.

In some embodiments, referring to FIG. 1, FIG. 2, and FIG. 6, the energy storage container includes a door body 13, and the door body 13 is used to selectively open or close the maintenance opening. For example, one end of the door body 13 is rotatably connected to the container body 1, and the other end of the door body 13 can be opened and closed.

In some embodiments, referring to FIG. 1, FIG. 2, and FIG. 6, the maintenance opening is formed on a side surface of the container body 1 along one of the first direction X and the second direction Y, and the cable outlet opening 1a is formed on a side surface of the container body 1 along the other of the first direction X and the second direction Y. The maintenance opening and the cable outlet opening 1a are respectively formed on two circumferentially adjacent side surfaces of the container body 1. With such design, end surfaces of two container bodies 1 away from the cable outlet opening 1a can abut against each other, reducing a gap between the container bodies 1, facilitating assembly of the container bodies 1 along the first direction X or the second direction Y at the use site, and improving the site utilization rate of the use site such as a power station.

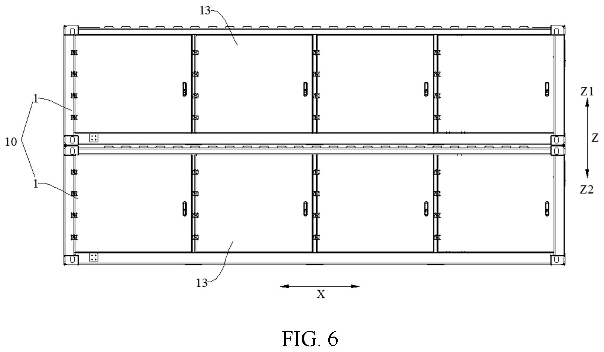

In some embodiments, referring to FIG. 6, FIG. 7, and FIG. 10, a stacking unit 10 includes at least one container body 1 or at least two container bodies 1 stacked along the up-down direction Z. At least two stacking units 10 can be assembled in a horizontal plane. Two stacking units 10 constitute a module 100. The cable outlet openings 1a of the two stacking units 10 of the module 100 can face away from each other, and the opposing end surfaces of the two stacking units 10 of the module 100 can abut against each other. For example, the cable outlet openings 1a of the two stacking units 10 of the module 100 face the left side and the right side, respectively, and the opposing end surfaces of the two stacking units 10 of the module 100 can abut against each other. For another example, the cable outlet openings 1a of the two stacking units 10 of the module 100 face the front side and the back side, respectively, and the opposing end surfaces of the two stacking units 10 of the module 100 can abut against each other.

It can be understood that when at least two stacking units 10 are assembled in a horizontal plane, two adjacent container bodies 1 along the front-back direction or the left-right direction are spaced apart to form an operation and maintenance channel 100a, and the operation and maintenance channel 100a can be used for operators to pass through, so that the operators can move to the location of the container body 1 that needs maintenance.

In some embodiments, the two stacking units 10 of the module 100 are arranged along the first direction X, and at least two modules 100 can be spaced apart along the second direction Y. In the second direction Y, the spacing space between two adjacent modules 100 is the operation and maintenance channel 100a.

In other embodiments, the two stacking units 10 of the module 100 are arranged along the second direction Y, and at least two modules 100 can be spaced apart along the first direction X. In the first direction X, the spacing space between two adjacent modules 100 is the operation and maintenance channel 100a.

As an example, referring to FIG. 1 to FIG. 7, a battery 2, a fire protection system, a liquid cooling pipeline 4, and a cable system 3 are provided in the accommodating space 1b of the container body 1. The dimensions of the container body 1 in the first direction X and the second direction Y are the same as the dimension of the standard container having the preset dimension. The dimension of the container body 1 in the up-down direction Z is one-half of the dimension of the standard container having the preset dimension. For example, a flatbed truck with a horizontal load-bearing area of 20 feet is usually used to transport the energy storage container. The projected area of the container body 1 of the present application on the horizontal plane is the same as that of the standard container, both being 20 feet. At least two container bodies 1 can be separately transported to the use site, such as a power station site, by 20-foot flatbed trucks. The axle load distribution of the flatbed truck is more uniform during transportation, and the transportation is safer. At least two container bodies 1 are stacked along the up-down direction Z at the use site to form a stacking unit 10. For example, two, three, or more container bodies 1 can be stacked along the up-down direction Z to form the stacking unit 10.

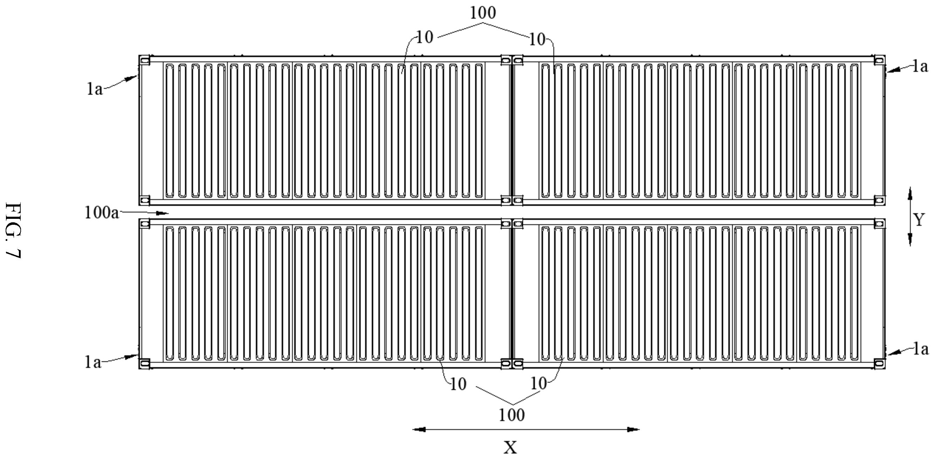

Referring to FIG. 7, at least two stacking units 10 can be assembled in a horizontal plane. Two stacking units 10 constitute a module 100. The cable outlet openings 1a of the two stacking units 10 of the module 100 can face away from each other, and the opposing end surfaces of the two stacking units 10 of the module 100 can abut against each other. For example, the cable outlet openings 1a of the two stacking units 10 of the module 100 face the left side and the right side, respectively, and the opposing end surfaces of the two stacking units 10 of the module 100 can abut against each other. For another example, the cable outlet openings 1a of the two stacking units 10 of the module 100 face the front side and the back side, respectively, and the opposing end surfaces of the two stacking units 10 of the module 100 can abut against each other. With such design, a floor area of the two stacking units 10 of the module 100 is approximately 40 feet, leading to a higher area utilization rate of the overall power station.

Taking sea transportation as an example, sea transportation charges berthing fees according to standard containers. If non-standard container dimensions are used, berthing fees are also charged according to standard containers. In this embodiment, the dimension of the container body 1 in the up-down direction Z is one-half of the dimension of a 20-foot standard container. Two container bodies 1 can be stacked along the up-down direction Z for sea transportation. The total height dimension of the two container bodies 1 stacked along the up-down direction Z is the same as the height dimension of a 20-foot standard container. In this way, the two container bodies 1 can still be charged as one 20-foot standard container during sea transportation.

It can be understood that, according to the above embodiment, the dimension of the container body 1 in the up-down direction Z may be one-third or one-fourth of the dimension of the standard container having the preset dimension, or the like. During sea transportation, three or four container bodies 1 can also be stacked along the up-down direction Z, so that the total height dimension of multiple container bodies 1 stacked along the up-down direction Z is the same as the height dimension of the standard container. This also allows multiple container bodies 1 to still be charged as one standard container during sea transportation, saving transportation costs.

Referring to FIG. 1 to FIG. 7, the container body 1 includes a frame 11 and at least two shielding plates 12. The frame 11 includes a load-bearing frame 111 and a diagonal brace beam 112. Each shielding plate 12 covers an outer surface of the load-bearing frame 111. The diagonal brace beam 112 is arranged at a bottom of the load-bearing frame 111, and the diagonal brace beam 112 extends along a third direction in a plane perpendicular to the up-down direction Z. The frame 11 includes a longitudinal reinforcing beam 113 extending along the first direction X. Two longitudinal reinforcing beams 113 are both arranged at the bottom of the load-bearing frame 111. The two longitudinal reinforcing beams 113 are spaced apart along the up-down direction Z. One end of at least part of the diagonal brace beam 112 is clamped between the two longitudinal reinforcing beams 113. In this way, the strength of the bottom of the container body 1 is jointly improved by the diagonal brace beam 112 and the longitudinal reinforcing beam 113, and at least two container bodies 1 stacked along the up-down direction Z can be placed more stably on a bearing surface such as the ground.

The foregoing embodiments are merely for describing the technical solutions of the present application rather than limiting the present application. Although the present application has been described in detail with reference to the foregoing embodiments, persons of ordinary skill in the art should appreciate that they can still make modifications to the technical solutions described in some embodiments or make equivalent replacements to some or all technical features thereof without departing from the scope of the technical solutions of some embodiments of the present application. In particular, as long as there is no structural conflict, the various technical features mentioned in the embodiments can be combined in any manner.

## Claims

1. An energy storage container, comprising a container body, wherein in three directions of a first direction, a second direction, and an up-down direction, a dimension of the container body in two of the directions is the same as a dimension of a standard container having a preset dimension, a dimension of the container body in the other direction is smaller than the dimension of the standard container having the preset dimension, and the preset dimension is 10 feet, 20 feet, 30 feet, 40 feet, or 45 feet; wherein the first direction, the second direction, and the up-down direction are perpendicular to each other.

2. The energy storage container according to claim 1, wherein the energy storage container comprises a battery disposed in the container body, and a single battery has a weight of 5 kg to 60 kg.

3. The energy storage container according to claim 2, wherein the quantity of the batteries is 416 to 2080.

4. The energy storage container according to claim 1, wherein the energy storage container comprises a battery disposed in the container body, and a total weight of all the batteries is 10 tons to 25 tons.

5. The energy storage container according to claim 1, wherein at least one of a main control box, a power distribution box, a liquid cooling unit, a general control box, and a busbar is not provided in the container body.

6. The energy storage container according to claim 1, wherein the container body is filled with a battery, a fire protection system, a liquid cooling pipeline, and a cable system.

7. The energy storage container according to claim 6, wherein the liquid cooling pipeline comprises a main liquid inlet pipeline, a main liquid return pipeline, a liquid inlet branch, and a liquid return branch, each of the batteries corresponds to one of the liquid inlet branches and one of the liquid return branches, each of the liquid inlet branches is in communication with the main liquid inlet pipeline, and each of the liquid return branches is in communication with the main liquid return pipeline.

8. The energy storage container according to claim 7, wherein at least two of the batteries are arranged along a plane perpendicular to the up-down direction to form a layer of battery pack, at least two of the battery packs are stacked along the up-down direction, and the main liquid inlet pipeline and the main liquid return pipeline are arranged above the uppermost battery pack.

9. The energy storage container according to claim 1, wherein the container body comprises a frame and a shielding plate, the frame comprises a load-bearing frame and a diagonal brace beam, the shielding plate covers an outer surface of the load-bearing frame, the diagonal brace beam is arranged at a bottom of the load-bearing frame, and the diagonal brace beam extends along a third direction in a plane perpendicular to the up-down direction, wherein both the first direction and the second direction are obliquely intersected with the third direction.

10. The energy storage container according to claim 9, wherein the frame comprises a longitudinal reinforcing beam extending along the first direction, two of the longitudinal reinforcing beams are both arranged at the bottom of the load-bearing frame, the two of the longitudinal reinforcing beams are spaced along the up-down direction, and one end of at least part of the diagonal brace beam is clamped between the two longitudinal reinforcing beams.

11. The energy storage container according to any one of claims 1 to 10, wherein the container body is formed with a maintenance opening and a cable outlet opening, and the maintenance opening and the cable outlet opening are respectively formed on two side surfaces of the container body that are different from each other along a circumferential direction.

12. The energy storage container according to claim 11, wherein the maintenance opening is formed on a side surface of the container body along one of the first direction and the second direction, and the cable outlet opening is formed on a side surface of the container body along the other of the first direction and the second direction.
